# DEMANDE DE BREVET EUROPEEN

(11) **EP 1 479 557 A1**
(43) Date de publication de la demande: **24.11.2004**
(21) Numéro de dépôt: 04291274.1
(22) Date de dépôt: 19.05.2004
(51) Int. Cl.: B60L 5/14

(54) **Tête de captation d'électricité pour un véhicule tel qu'un trolleybus ou un tramway**

(30) Priorité: 20.05.2003 FR 0306025
(71) Demandeur: Railtech International, 59590 Raismes (FR)
(72) Inventeur: Pelletier, Yves, 60240 La Villetertre (FR)
(74) Mandataire: Martin, Jean-Jacques

(57) **Abrégé**

La présente invention concerne un dispositif, en particulier une tête, de captation d'électricité pour un véhicule tel qu'un trolleybus ou un tramway.

La tête (13) comporte un corps (28) de liaison avec une extrémité (12) d'une perche (10) et un corps (29) porteur d'un organe (31) de captation, apte à s'appliquer sous un fil (14) d'alimentation. Le corps porteur (29) peut pivoter par rapport au corps de liaison (28) autour d'un axe (30) le long duquel il peut coulisser entre une position limite basse, qu'il occupe dans des conditions normales de circulation, et une position limite haute qu'il gagne, sous l'action de moyens de sollicitation élastique (53), en cas de déperchage pour provoquer, par l'intermédiaire de moyens de détection (92, 100) de l'une de ces positions, un rabattement de la perche (10).

Ce dispositif réagit rapidement en cas de déperchage et il est peu sensible au dérèglement par usure ou matage.

## Description

La présente invention concerne un dispositif de captation d'électricité pour un véhicule tel qu'un trolleybus ou un tramway, comportant :
- une base de montage sur le véhicule,
- une perche de captation d'électricité, présentant une première et une deuxième extrémités et articulée sur la base par sa première extrémité, notamment autour d'un axe approximativement horizontal de basculement pour présenter une gamme déterminée d'orientations possibles incluant une orientation limite de repos, dans laquelle elle est approximativement horizontale, une orientation limite de déperchage, dans laquelle elle est dressée à partir de sa première extrémité, et une multitude d'orientations intermédiaires de service dans lesquelles la perche est ascendante de sa première extrémité vers sa deuxième extrémité,
- une tête de captation d'électricité, comportant un corps de liaison, solidaire de la perche à la deuxième extrémité de celle-ci, un corps porteur, raccordé au corps de liaison par une articulation autour d'un axe de pivotement situé dans un plan perpendiculaire audit axe de basculement, ledit axe de pivotement étant approximativement vertical dans lesdites orientations de service, et un organe de captation d'électricité, porté par le corps porteur, situé au moins pour l'essentiel au-dessus du corps porteur et du corps de liaison dans lesdites orientations de service et apte à venir s'appliquer vers le haut contre un fil approximativement horizontal d'alimentation en électricité, alors que la perche occupe l'une quelconque desdites orientations de service,
- des moyens de levage pour appliquer à la perche, autour dudit axe de basculement, un couple de levage dans un sens allant de l'orientation limite de repos vers l'orientation limite de déperchage de façon à appliquer l'organe de captation d'électricité, vers le haut, contre le fil d'alimentation en électricité avec un effort dont la valeur entre dans une gamme déterminée de valeurs, alors que la perche occupe l'une quelconque desdites orientations intermédiaires de service,
- des moyens de rabattement pour appliquer de façon commandée à la perche un couple de rabattement dans un sens opposé audit sens, autour dudit axe de basculement, pour dégager l'organe de captation d'électricité, vers le bas, par rapport au fil d'alimentation en électricité,
- des moyens de commande desdits moyens de rabattement, comportant des moyens de détection pour détecter une annulation dudit effort et pour commander alors automatiquement un rabattement de la perche vers son orientation limite de repos afin de descendre automatiquement la tête de captation en cas de déperchage.

La Demanderesse a décrit un tel dispositif dans son brevet européen N° 0 575 248, en relation avec un mode de réalisation dans lequel la perche est subdivisée, en particulier par un axe d'articulation situé à proximité de sa deuxième extrémité et orienté parallèlement à l'axe de basculement, en deux tronçons approximativement rigides dont le premier, plus long que le deuxième, constitue la première extrémité et dont le deuxième constitue la deuxième extrémité et tend à pivoter vers le haut par rapport au premier, si l'on se réfère aux orientations de service de la perche, sous l'effet d'un ressort calibré de telle sorte que :
- tant que la tête de captation s'applique vers le haut contre le fil d'alimentation avec un effort dont la valeur entre dans ladite gamme déterminée, c'est-à-dire reçoit du fil d'alimentation un effort de même valeur mais de sens contraire, l'action de ce ressort soit surcompensée et le deuxième tronçon soit placé par rapport au premier tronçon dans une position relative limite dans laquelle il prolonge celui-ci, et que,
- si lesdits efforts viennent à s'annuler en raison d'un déperchage, le deuxième tronçon bascule vers le haut par rapport au premier jusqu'à une position relative limite dans laquelle des détecteurs inductifs ou mécaniques montés à proximité immédiate de l'articulation relative des deux tronçons sont excités de façon à émettre un signal qui provoque un rabattement coercitif de la perche autour de l'axe de basculement afin de ramener la tête de captation à un niveau inférieur à celui du fil d'alimentation et à éviter ainsi que la tête de captation ou la perche risque de venir heurter un appareil de ligne ou une suspente du fil d'alimentation.

Dans le mode de réalisation le plus évolué de ce dispositif connu, faisant l'objet de la demande de brevet européen EP 0 989 015, la gamme déterminée dans laquelle doit entrer la valeur de l'effort avec lequel la tête de captation s'applique sous le fil d'alimentation, ou encore de la réaction opposée à la tête de captation par ce dernier, se limite à des tolérances autour d'une valeur de consigne, en présence de moyens pour réguler cet effort en fonction de l'inclinaison de la perche de façon à le maintenir sensiblement à cette valeur déterminée de consigne.

Dans ce dispositif connu, la tête de captation est conforme au brevet européen N° 0 226 497 de la Demanderesse, ou encore à l'Art antérieur, en ce sens que son corps de liaison ne peut se déplacer par rapport au corps porteur que par pivotement relatif autour de l'axe de pivotement, de façon à permettre à la tête de captation de suivre le fil d'alimentation même lorsque le véhicule n'est pas placé directement à l'aplomb de ce fil, la première extrémité de la perche étant à cet effet articulée sur la base non seulement autour de l'axe approximativement horizontal de basculement mais également autour d'un axe approximativement vertical de pivotement.

Ce dispositif donne toute satisfaction en ce qu'il permet de ramener beaucoup plus rapidement que les dispositifs antérieurement connus la tête de captation à un niveau inférieur à celui du fil de contact après un déperchage, c'est-à-dire de réduire considérablement le temps pendant lequel la tête de captation ou la perche risque d'endommager les appareils de ligne ou les suspentes du fil d'alimentation, mais il est apparu qu'en service intensif prolongé, l'usure progressive de l'articulation mutuelle des premier et deuxième tronçons de perche, qui se déplacent l'un par rapport à l'autre autour de cette articulation non seulement en cas de déperchage mais également en circulation normale, par exemple en cas de changement brutal d'assiette du véhicule à la façon d'un « coup de raquette », et le matage progressif des butées définissant les positions relatives limites des tronçons de la perche, en particulier leur position limite correspondant au déperchage, introduisent à la longue une certaine imprécision dans la détection d'un tel déperchage, si bien que le dispositif nécessite un nouveau réglage pour retrouver sa pleine efficacité.

Le but de la présente invention est de remédier à cet inconvénient et, à cet effet, la présente invention propose un dispositif du type indiqué en préambule, dans lequel toute subdivision de la perche en deux tronçons articulés entre eux ou, plus généralement, susceptibles de fléchir l'un par rapport à l'autre est supprimée, et qui est caractérisé en ce que :
- ladite articulation est réalisée de façon à autoriser une translation du corps porteur par rapport au corps de liaison suivant ledit axe de pivotement, entre une position limite haute et une position limite basse, par rapport au corps de liaison,
- sont prévus des moyens de sollicitation élastique du corps porteur vers sa position limite haute par rapport à l'embout de perche, lesdits moyens de sollicitation élastique étant calibrés de telle sorte que le corps porteur occupe sa position limite basse, par réaction, lorsque l'organe de captation d'électricité est appliqué vers le haut contre le fil d'alimentation en électricité avec un effort dont la valeur entre dans ladite gamme déterminée, et sa position limite haute en cas d'annulation dudit effort, en particulier en cas de déperchage, et
- les moyens de détection sont des moyens de détection de l'occupation, par le corps porteur, de l'une, déterminée, desdites positions limites par rapport au corps de liaison.

En d'autres termes, la présente invention propose, plutôt que d'articuler la perche en deux tronçons dont la position relative indique le déperchage, d'ajouter un degré de liberté à la tête de captation connue, sous forme d'une possibilité de translation du corps porteur par rapport au corps de liaison suivant leur axe de pivotement relatif de toute façon prévu, et de se référer à la position relative du corps de liaison et du corps porteur suivant leur axe de pivotement relatif pour détecter le déperchage, c'est-à-dire l'annulation de l'effort d'application de la tête de captation vers le haut sous le fil d'alimentation, et commander alors automatiquement le rabattement de la perche vers son orientation limite de repos, étant entendu que c'est alors aux moyens de sollicitation élastique du corps porteur vers sa position limite haute par rapport au corps de liaison qu'il appartient de maintenir la tête de captation en appui sur le fil d'alimentation en cas de variation brutale d'assiette du véhicule.

Un Homme du métier comprendra aisément qu'un tel dispositif selon l'invention soit beaucoup moins vulnérable à l'usure et au matage que le dispositif décrit dans le brevet européen N° 0 575 248.

En effet, alors que, dans le cas du dispositif décrit dans le brevet européen N° 0 575 248, les efforts, en particulier la réaction appliquée par le fil d'alimentation à la tête de captation en circulation normale et des efforts résultant de l'inertie de la tête de captation et du deuxième tronçon de la perche lorsque les deux tronçons de la perche viennent en butée mutuelle en cas de déperchage, se transmettent au niveau de l'articulation mutuelle des deux tronçons avec un bras de levier qui les amplifie, ce qui contribue dans ce cas à l'accélération de l'usure de l'articulation mutuelle et du matage des surfaces de butée mutuelle, c'est-à-dire à un dérèglement plus ou moins rapide du dispositif, ces efforts se transmettent du corps porteur au corps de liaison de la tête de captation d'électricité, dans un dispositif selon l'invention, à peu de choses près suivant leur axe de pivotement relatif et sans phénomène d'amplification, c'est-à-dire d'une part avec une usure beaucoup moindre, et d'ailleurs pratiquement sans conséquence sur la détection du déperchage, des moyens autorisant le pivotement relatif et la translation relative du corps porteur et du corps de liaison, et d'autre part sans effet d'amplification et par conséquent sans provoquer de matage des moyens de butée relative définissant les positions limites haute et basse ou, du moins, sans que leur matage éventuel influence de façon sensible la détection du déperchage, à moins d'un temps de service considérablement accru en comparaison avec celui qui nécessite un réglage du dispositif décrit dans le brevet européen N° 0 575 248. Cet effet est d'autant plus sensible que les masses dont le mouvement en cas de déperchage permet de détecter celui-ci sont considérablement plus faibles puisqu'elles se limitent à la masse du corps porteur et de l'organe de captation d'électricité, au lieu d'inclure la masse de la tête de captation dans son ensemble et celle du deuxième tronçon de la perche ; la réduction d'inertie qui en résulte est favorable non seulement en termes de réduction du matage des moyens de butée, mais également en termes de rapidité du passage à la position limite haute en cas de déperchage, c'est-à-dire de rapidité de la détection du déperchage et du rabattement consécutif de la perche.

Ainsi, un dispositif selon l'invention est susceptible de donner satisfaction beaucoup plus longtemps que le dispositif décrit dans le brevet européen N° 0 575 248 sans nécessiter de réglage, et peut réagir beaucoup plus rapidement en cas de déperchage.

Dans la mesure où il ne met en oeuvre qu'une conception particulière de la tête de captation d'électricité, ainsi elle-même caractéristique de la présente invention, il est compatible avec toute perche de conception traditionnelle, c'est-à-dire dans laquelle aucune distinction n'est faite entre deux tronçons articulés mutuellement ou aptes à fléchir autrement l'un par rapport à l'autre. Cette possibilité, à laquelle s'ajoute le fait que la mise en oeuvre de la présente invention entraîne peu de complications et donc un faible surcoût de la tête de captation en comparaison avec une tête de captation connue, par exemple du type décrit dans le brevet européen N° 0 226 497, rend particulièrement économique la réalisation d'un dispositif selon l'invention.

Cependant, un tel dispositif offre toutes les possibilités décrites dans le brevet européen N° 0 575 248 ou la demande de brevet européen N° 0 989 015, en termes de régulation de l'effort d'application de la tête de captation sous le fil d'alimentation en régime normal de circulation, en termes de rabattement de la perche en deux mouvements en cas de déperchage, à savoir un premier mouvement de descente comparativement rapide et un second mouvement de descente comparativement lent, et de retour automatique de la perche dans une orientation déterminée de référence ou de repos autour d'un axe approximativement vertical de pivotement par rapport au véhicule au cours du second mouvement de descente.

En utilisant des moyens de détection appropriés, on peut choisir de détecter le déperchage soit par détection de l'arrivée du corps porteur en position limite haute par rapport au corps de liaison, soit par détection de ce que le corps porteur a quitté la position limite basse ou, de préférence, cette position limite basse ou une plage déterminée de positions proches de cette position limite basse mais excluant la position limite haute, ce qui offre l'avantage d'une détection plus rapide après déperchage, c'est-à-dire d'un rabattement plus rapide de la perche et d'une disparition plus rapide des risques de détérioration des appareils de ligne ou des suspentes du fil d'alimentation par la perche ou par la tête de captation, tout en permettant d'éviter un rabattement intempestif si l'effort d'application de la tête de captation sous le fil d'alimentation vient simplement à s'alléger, tout en restant dans une gamme déterminée, par rapport à une valeur de consigne.

De façon générale, les moyens de détection peuvent être de tout type connu et consister par exemple en des contacteurs de fin de course, mais on préfère utiliser des moyens de détection sans contact, donc insensibles à l'usure. Ainsi, on peut avantageusement utiliser à ce titre des moyens de détection de la position relative de deux zones déterminées, situées en regard l'une de l'autre suivant une direction définie par ledit axe de pivotement, à raison d'une zone déterminée du corps porteur et d'une zone déterminée du corps de liaison.

Plus précisément, lorsque les moyens de détection sont propres à détecter l'occupation de la position limite basse et d'une plage déterminée de positions proches de cette position limite basse mais excluant la position limite haute, comme il est préféré, ladite zone du corps porteur est située au-dessus de ladite zone du corps de liaison dans lesdites orientations de service et les moyens de détection détectent l'occupation de la position limite basse par détection d'une proximité relative desdites zones.

De préférence, les moyens de détection sont choisis de telle sorte qu'ils comportent un composant actif de détection, raccordé généralement électriquement à un circuit apte à provoquer en particulier le rabattement de la perche en cas de déperchage, et un composant passif de détection, qu'il n'est pas nécessaire de raccorder par exemple électriquement à un tel circuit, auquel cas on prévoit avantageusement que le composant actif de détection soit porté solidairement par le corps de liaison, dans ladite zone de celui-ci, et que le composant passif de détection soit porté solidairement par le corps porteur, dans ladite zone de celui-ci, ce qui facilite les raccordements du dispositifs selon l'invention audit circuit.

Le choix des moyens de détection dans un groupe comportant les détecteurs inductifs et les détecteurs capacitifs facilite alors une réalisation du dispositif sous une forme propre à permettre la détection du déperchage en toute position du corps porteur au pivotement autour de l'axe de pivotement par rapport au corps de liaison.

En effet, lorsque, comme il est connu en soi, des moyens de butée sont prévus pour limiter le pivotement du corps porteur autour de l'axe de pivotement par rapport au corps de liaison à une plage angulaire déterminée, on peut aménager lesdites zones du corps de liaison et du corps porteur dans des positions respectives décalées par rapport à cet axe de pivotement et prévoir que les moyens de détection comportent un détecteur, porté solidairement par le corps de liaison, dans ladite zone de celui-ci, et présentant un développement angulaire inférieur à ladite plage déterminée, et une contrepartie apte à influer sur le détecteur, portée solidairement par le corps porteur, dans ladite zone de celui-ci, et présentant autour dudit axe un développement angulaire au moins égal à ladite plage angulaire déterminée et une position telle qu'elle soit en permanence placée en regard du détecteur suivant la direction de l'axe de pivotement, dans les limites de pivotement du corps porteur par rapport au corps de liaison.

La tête de captation mise en oeuvre selon l'invention peut par ailleurs présenter une simplicité de réalisation tout à fait similaire à celle des dispositifs de l'Art antérieur, par exemple à celle de la tête de captation conforme au brevet européen N° 0 226 497 puisque l'articulation du corps porteur autour de l'axe de pivotement par rapport au corps de liaison peut comporter, conformément à l'Art antérieur, un pivot solidaire du corps porteur et engagé dans un palier du corps de liaison avec possibilité de rotation relative autour de l'axe de pivotement, seuls étant prévus en plus une possibilité de coulissement relatif suivant cet axe de pivotement, entre les positions limites haute et basse, et des moyens de sollicitation élastique du pivot vers la position correspondant à la position limite haute, par rapport au palier, par exemple sous la forme d'un ressort hélicoïdal coaxial, travaillant à la compression, ce qui représente une faible complication et un faible surcoût par rapport au dispositif de l'Art antérieur.

Dans la mesure où les moyens caractéristiques de la mise en oeuvre du dispositif selon l'invention peuvent être limités à la tête de captation elle-même, la présente invention s'étend à une telle tête de captation, comportant un corps de liaison, apte à être solidarisé avec une extrémité d'une perche de captation d'électricité, un corps porteur, raccordé au corps de liaison par une articulation autour d'un axe de pivotement, et un organe de captation d'électricité, porté par le corps porteur et situé au moins pour l'essentiel d'un même côté du corps porteur et du corps de liaison suivant l'axe de pivotement, cette tête de captation d'électricité étant caractérisée en ce que :
- ladite articulation est réalisée de façon à autoriser une translation du corps porteur par rapport au corps de liaison suivant ledit axe de pivotement, entre une position limite de décalage maximal dudit côté et une position limite de décalage minimal dudit côté, par rapport au corps de liaison, et
- sont prévus des moyens de sollicitation élastique du corps porteur vers sa position limite de décalage maximal par rapport au corps de liaison, et des moyens de détection de l'occupation, par le corps porteur, de l'une desdites positions limites par rapport au corps de liaison.

La tête de captation d'électricité peut en outre comporter toutes les caractéristiques liées aux modes de réalisation préférés, précités, du dispositif selon l'invention.

On observera que cette possibilité de limiter à la tête de captation elle-même les moyens caractéristiques du dispositif selon l'invention permet de réaliser un tel dispositif à partir d'une tête selon l'invention, d'une part, et de n'importe quelle perche, d'autre part, pourvu que cette perche ne soit pas subdivisée en deux tronçons articulés entre eux à moins de bloquer leur articulation mutuelle. En d'autres termes, on peut :
- fabriquer un dispositif selon l'invention à partir de perches du type le plus simple, propres à recevoir n'importe quelle tête de captation, et d'une tête de captation conforme à la présente invention, ce qui permet de standardiser la fabrication des perches et de simplifier la tenue des stocks, ou encore
- équiper toute perche préexistante d'une tête de captation selon l'invention pour réaliser un dispositif selon l'invention, quitte à bloquer l'articulation éventuelle de plusieurs tronçons de la perche entre eux, ce qui permet d'adapter conformément à la présente invention, avec tous les avantages qui en découlent, un dispositif de captation d'électricité conforme à l'Art antérieur, en particulier au brevet européen N° 0 575 248 ou à la demande de brevet européen N° 0 989 015 de la Demanderesse.

D'autres caractéristiques et avantages d'un dispositif et d'une tête de captation d'électricité conformes à la présente invention ressortiront de la description ci-dessous, ainsi que des dessins annexés qui accompagnent cette description.

La figure 1 montre une vue partielle et simplifiée, en élévation latérale, d'un trolleybus équipé d'un dispositif de captation d'électricité selon l'invention, avec figuration d'une seule des deux perches équipant habituellement ce type de véhicule d'une part en trait plein, alors que la tête de captation s'applique sous le fil d'alimentation dans des conditions normales de circulation, et d'autre part en trait mixte, après déperchage.

La figure 2 montre, en une vue similaire à celle de la figure 1 mais fortement agrandie, la tête de captation à l'état appliqué sous le fil d'alimentation, alors que le corps porteur et l'organe de captation d'électricité occupent une orientation moyenne, entre deux orientations limites, autour de l'axe de pivotement par rapport au corps de liaison, les moyens de détection du déperchage étant vus partiellement en coupe par un plan moyen incluant l'axe de pivotement.

La figure 3 montre, en une vue similaire à celle de la figure 2, la tête de captation à l'état déperché, alors que la perche occupe une orientation de repos dans laquelle elle longe le toit du véhicule.

La figure 4 montre, en une vue similaire à celle de la figure 2, le corps porteur seul et sans coupe.

La figure 5 montre une vue de dessus du corps porteur, dans un sens de l'axe de pivotement repéré en V à la figure 4.

La figure 6 montre, en une vue en coupe par deux demi-plans perpendiculaires à l'axe de pivotement et repérés en VI-VI à la figure 2, les positions relatives associées des moyens de butée limitant la rotation du corps porteur autour de l'axe de pivotement par rapport au corps de liaison et des composants des moyens de détection, dans l'orientation moyenne précitée du corps porteur par rapport au corps de liaison.

Les figures 7 et 8 montrent, en une vue similaire à celle de la figure 6, les positions relatives associées des moyens de butée et les composants des moyens de détection dans les deux orientations limites du corps porteur autour de l'axe de pivotement par rapport au corps de liaison.

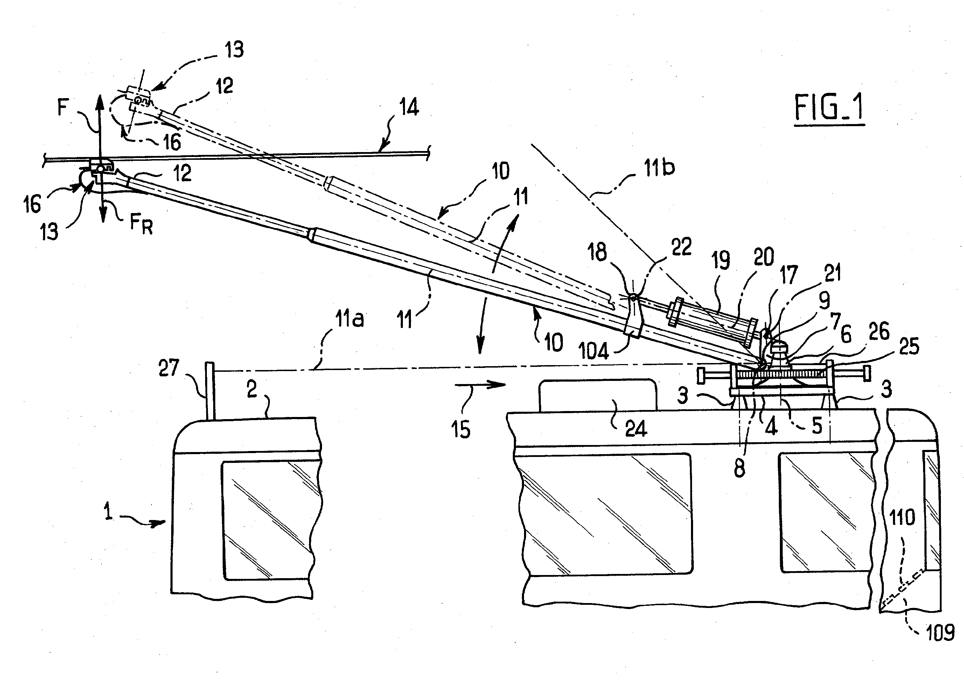

On se référera en premier lieu à la figure 1, où l'on a illustré schématiquement un trolleybus 1, dont on a désigné par 2 le toit, approximativement horizontal dans des conditions normales de circulation ; ce trolleybus 1 ne constitue toutefois qu'un exemple non limitatif de véhicule susceptible d'être équipé d'un dispositif de captation d'électricité selon l'invention, lequel pourrait notamment équiper également un tramway.

Sur le toit 2 sont fixées, par l'intermédiaire d'isolateurs électriques 3, deux bases 4 mutuellement identiques, dont une seule est visible à la figure 1 et qui sont mutuellement symétriques par rapport à un plan non illustré, approximativement vertical dans des conditions normales de circulation et constituant pour le trolleybus 1 un plan longitudinal de symétrie. Dans le cas d'un tramway, les deux bases 4 sont généralement remplacées par une base unique, identique à chacune d'entre elles et chevauchant le plan de symétrie précité dans une relation de symétrie propre par rapport à celui-ci, cette base unique comportant les mêmes composants, qui vont être décrits à présent, qu'une base 4 respective.

Sur chacune des bases 4 est montée, au pivotement autour d'un axe 5 approximativement vertical dans des conditions normales de circulation, une tourelle 6 libre de tourner autour de cet axe de pivotement 5 par rapport à la base 4 correspondante dans des conditions normales de circulation ; les deux axes de pivotement 5 sont mutuellement symétriques par rapport au plan de symétrie non illustré, dans lequel est disposé l'axe de pivotement de la tourelle unique, par rapport à la base unique, dans le cas d'un tramway.

Chaque tourelle 6 porte de façon solidaire, au-dessus de la base 4 correspondante, une chape 7 définissant un axe 8 d'articulation, sur la tourelle 6, d'une première extrémité 9 d'une perche 10 respective. Cet axe 8 est situé dans un plan perpendiculaire à l'axe de pivotement 5, et il est orienté approximativement horizontalement dans des conditions normales de circulation pour constituer un axe de basculement de la perche 10 par rapport à la tourelle 6 correspondante et à la base 4 correspondante.

Les deux perches 10 sont identiques et chacune d'entre elles est rectiligne et rigide si l'on excepte une éventuelle tendance du matériau la constituant à fléchir élastiquement ; elles sont par exemple constituées par un tube métallique respectif, de préférence revêtu extérieurement d'un matériau électriquement isolant, ou un assemblage respectif de tubes métalliques, de préférence ainsi revêtus, d'autres modes de réalisation pouvant naturellement être choisis sans que l'on sorte pour autant du cadre de la présente invention, par exemple sous forme de perche composite ou combinée composite-métal.

Chaque perche 10 présente un axe moyen 11 qui est perpendiculaire à l'axe de basculement 8 et, par basculement de la perche 10 autour de l'axe 8, peut occuper toute orientation entre une orientation approximativement horizontale, indiquée en 11a à la figure 1 et correspondant à une position hors service ou de repos en ce qui concerne la perche 10, et une orientation ascendante à partir de l'axe de basculement 8 et formant par rapport à l'horizontale un angle de l'ordre de quelques dizaines de degrés et généralement voisin de 45°, comme on l'a indiqué en 11b à la figure 1, référence faite à des conditions normales de circulation. Des moyens de butée pour la perche 10, prévus sur la chape 7 et non représentés, empêchent la perche 10 de gagner une orientation plus proche de la verticale.

A l'opposé de son extrémité 9, la perche 10 présente une deuxième extrémité 12, au niveau de laquelle est assemblée, de façon rigide, à la perche 10 une tête 13 de captation d'électricité qui est caractéristique de la présente invention et sera décrite par la suite. L'assemblage de la tête de captation 13 à la perche peut s'effectuer par tout moyen connu, en particulier par des moyens propres à autoriser une désolidarisation de la tête de captation 13 par rapport à la perche 10 en cas d'application d'un effort dépassant une valeur de consigne en flexion ou en traction.

Comme les tête de captation de l'Art antérieur, en particulier du type décrit dans le brevet européen N° 0 226 497 de la Demanderesse, la tête de captation 13 selon l'invention est conçue pour s'appliquer de bas en haut, verticalement, sous un fil approximativement horizontal 14 d'alimentation en électricité, sous lequel se déplace le trolleybus 1, en appliquant à ce fil d'alimentation 14 un effort F dirigé de bas en haut, verticalement, et dont la valeur entre dans une gamme déterminée de valeurs, en particulier en étant régulée pour ne varier que dans les limites de tolérances étroites autour d'une valeur de consigne, afin de permettre une alimentation satisfaisante d'un moteur et de divers organes du trolleybus 1 en électricité. Le trolleybus 1, se déplaçant dans un sens schématisé par une flèche 15 à la figure 1, traîne alors la tête de captation 13 qui est, de ce fait, décalée vers l'arrière et vers le haut par rapport à l'axe de basculement 8, à partir duquel la perche 10 est ascendante vers l'arrière, l'axe 11 présentant une orientation intermédiaire entre les orientations limites schématisées en 11a et 11b. La tête de captation 13 est raccordée au moteur et aux organes précités du véhicule par l'intermédiaire d'un câble 16 qui, au niveau de la perche 10, est avantageusement logé à l'intérieur du ou des tubes constituant celle-ci, ou encore, dans le cas d'une perche 10 électriquement conductrice telle qu'une perche métallique revêtue extérieurement d'un matériau électriquement isolant, par l'intermédiaire de cette perche 10 elle-même et d'un câble 16 qui relie alors électriquement la tête de captation 13 à l'extrémité 12 de la perche 10, de façon connue en elle-même.

Pour assurer ou, le cas échéant, supprimer l'application de la tête de captation 13 sous le fil d'alimentation 14 sont prévus des moyens agissant entre la perche 10 et la chape 7, lesquels moyens pourraient présenter, de façon non illustrée, la forme connue de ressorts hélicoïdaux et d'un vérin pneumatique à simple effet agissant, suivant des axes respectifs parallèles à l'axe 12, respectivement en traction et en poussée entre une zone 17 de la chape 7 située au-dessus de l'axe d'articulation 8, si l'on se réfère à une position normale de circulation du trolleybus 1, et une zone 18 d'une chape 104 fixée solidairement sur la perche 10, cette zone 18 étant située au-dessus de la perche 10 si l'on se réfère par exemple à l'orientation de la perche 10 correspondant à l'application de la tête de captation 13 sous le fil d'alimentation 14. Ces ressorts hélicoïdaux et ce vérin à simple effet sont toutefois de préférence remplacés par un vérin à double effet 19, de préférence pneumatique, susceptible d'agir de façon commandée soit en traction, soit en poussée, suivant un axe 20 unique entre les zones précitées 17 et 18 dans lesquelles il est articulé, respectivement sur la chape 7 et sur la chape 104, autour d'axes respectifs 21 et 22 parallèles à l'axe 8 de basculement.

Conformément à la présente invention, la tête de captation 13 est conçue pour détecter elle-même aussi rapidement que possible, un déperchage survenant dans des conditions normales de circulation, dans lesquelles le vérin 19 applique à la perche 10, autour de l'axe 8, un couple propre à appliquer la tête 13 vers le haut, contre le fil d'alimentation 14, avec l'effort F précité et le fil d'alimentation 14 oppose une réaction à ce couple sous forme d'un effort de réaction F_{R} de même valeur que l'effort F mais de sens opposé, appliqué par le fil d'alimentation 14 à la tête de captation 13. Plus précisément, la tête de captation 13 est conçue pour détecter l'annulation de ces efforts antagonistes F et F_{R} lorsqu'elle échappe au fil d'alimentation 14, du fait que ce dernier n'oppose plus aucune réaction à l'action du vérin 19.

Naturellement, chacune des deux perches 10 est équipée d'une tête de captation 13 ainsi conçue pour coopérer avec un fil d'alimentation 14 respectif et détecter aussi instantanément que possible un déperchage, par détection de l'annulation de l'effort d'application de la tête de captation vers le haut contre le fil d'alimentation ou de l'effort qui lui est appliqué par ce dernier en réaction.

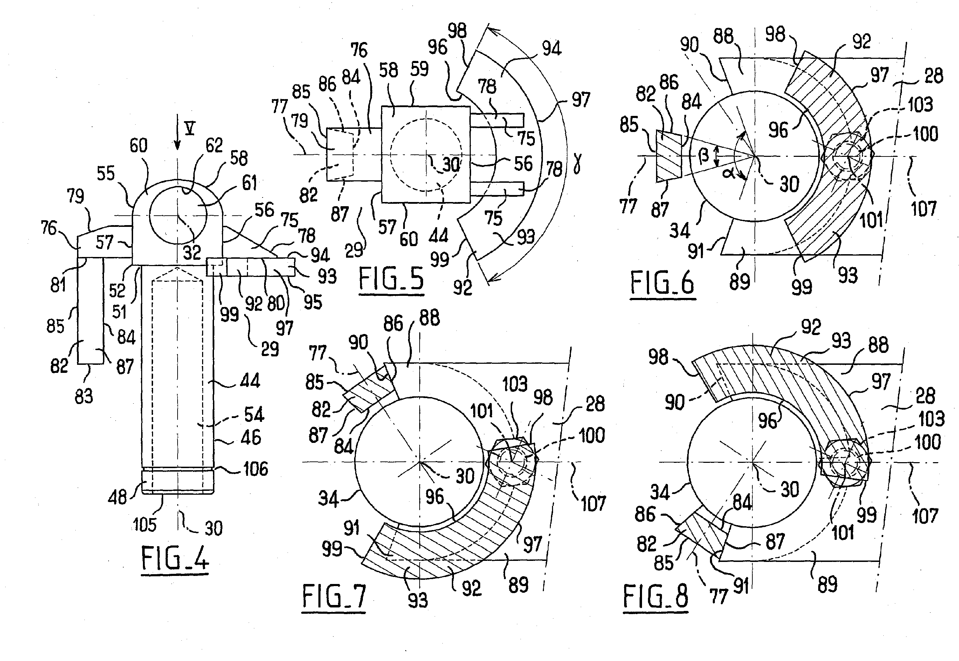

La détection du déperchage par la tête de captation 13 elle-même provoque l'émission d'un signal de déperchage, qui est transmis par des fils 23 longeant la perche 10 et avantageusement logés à l'intérieur de celle-ci comme le câble 16 à une unité de commande 24, par exemple montée sur le toit 2 du trolleybus 1. A titre d'exemple non limitatif, cette unité de commande 24 est avantageusement constituée de la façon décrite en référence aux figures 5 et 6A-6B du brevet européen N° 0 575 248 et de la demande de brevet européen N° 0 989 015, auxquels on se référera en ce qui la concerne, de façon à, aussi rapidement que possible après la réception du signal de déperchage, d'une part, déclencher une alarme lumineuse ou sonore 110 placée au tableau de bord 109 du trolleybus 1 pour avertir le conducteur de celui-ci qui, ainsi, peut garer son véhicule et l'arrêter dans les meilleures conditions et, d'autre part, provoquer une alimentation du vérin 19 en fluide sous pression dans un sens correspondant à la descente de la perche 10, afin de ramener le plus rapidement possible la tête de captation 13 à un niveau inférieur à celui du fil d'alimentation 14, par exemple en ramenant l'axe 11 de la perche 10 dans la position approximativement horizontale illustrée en 11a à la figure 1.

Lorsque l'unité de commande 24 est ainsi constituée, cette descente s'effectue en deux temps, à raison d'un premier temps, comparativement rapide, suffisant pour dégager la tête de captation 13 vers le bas par rapport au fil conducteur 14, et un deuxième temps, comparativement lent, de descente jusqu'à ce que l'axe 11 occupe l'orientation illustrée en 11a et, si le déperchage est survenu alors que la tête 13 était plus ou moins décalée latéralement par rapport au trolleybus 1, le deuxième temps de la descente de la perche 10 après déperchage s'accompagne d'un rappel de cette perche 10 dans une orientation déterminée de repos par rotation conjointe avec la tourelle 6 autour de l'axe de pivotement 5, par rapport à la base 4 correspondante. Par exemple, dans cette orientation déterminée de repos, l'axe 11 de la perche est parallèle au plan de symétrie précité du trolleybus 1, et la perche 10 est tournée vers l'arrière à partir de l'axe de pivotement 5 respectif, c'est-à-dire que la tête de captation 13 est située en porte-à-faux vers l'arrière par rapport au trolleybus 1, référence étant faite au sens 15 de marche avant du trolleybus.

A cet effet, dans l'exemple illustré, chaque tourelle 6 engrène en permanence avec une crémaillère approximativement horizontale respective 25 solidaire de la tige d'un vérin approximativement horizontal respectif 26, dont le corps est porté de façon solidaire par la base 4 respectivement correspondante, à un niveau inférieur à celui de l'axe de basculement 8 respectif, selon un montage décrit plus en détail dans le brevet européen N° 0 575 248 et dans la demande de brevet N° 0 989 015 auxquels on se référera à cet égard.

Les vérins 26 sont de préférence de type pneumatique comme les vérins 19, de façon à utiliser une source d'énergie déjà disponible sur le trolleybus 1.

Ce sont des vérins à double effet, placés en équipression dans des conditions normales de circulation et dont la détection d'un déperchage provoque automatiquement l'alimentation en pression fluidique dans un sens propre à ramener la perche 10 correspondante dans l'orientation précitée de repos, dans laquelle elle peut avantageusement reposer dans un berceau 27 prévu à l'arrière du trolleybus, de façon connue en elle-même et non représentée dans le détail.

On peut également prévoir de commander manuellement l'alimentation des vérins 26 en pression fluidique pour orienter à volonté chaque perche 10, autour de l'axe 5 respectif, de même que l'on peut prévoir d'alimenter chaque vérin 19 de façon commandée manuellement, pour orienter à volonté l'axe 11 par rotation autour de l'axe de basculement 8 respectivement correspondant, de façon à effectuer par commande manuelle toute opération de déperchage et d'emperchage, que ce soit au dépôt, respectivement en fin et début de service, auquel cas il n'est plus nécessaire de prévoir un repérage précis de la position du trolleybus 1 par rapport au fil d'alimentation 14, ou en ligne, par exemple après déperchage ou en cas d'incident nécessitant une mise hors tension du trolleybus 1.

Ces manoeuvres peuvent être commandées depuis le tableau de bord 109 du trolleybus 1 ainsi que, de préférence, depuis l'extérieur de celui-ci, comme on l'a décrit dans le brevet européen N° 0 575 248 et dans la demande de brevet européen N° 0 989 015, grâce à une conception de l'unité de commande 24 appropriée à cet effet, ressortant de ce brevet européen et de cette demande de brevet européen auxquels on se référera également à cet égard.

En dehors de ses périodes d'alimentation volontaire ou coercitive, en vue d'effectuer des manoeuvres de déperchage et emperchage volontaires de la perche 10 respectivement correspondante ou de la ramener coercitivement à sa position de repos en cas de déperchage accidentel, et des périodes pendant lesquelles la perche est ainsi placée au repos, chaque vérin 19 est de préférence alimenté en pression fluidique de façon asservie à l'inclinaison de la perche 10 respectivement correspondante, c'est-à-dire par exemple à l'orientation de l'axe 11 de celle-ci, pour tendre en permanence à lever cette perche 10 de telle sorte que l'effort F d'application de la tête de captation 13 de bas en haut contre le fil d'alimentation 14 soit de valeur aussi constante que possible.

A cet effet, sont prévus des moyens de captation de l'orientation de l'axe 11 par rotation autour de l'axe de basculement 8, par rapport à la tourelle 6 correspondante, lesquels moyens de captation commandent un régulateur de pression, intégré dans le circuit d'alimentation du vérin 19 en pression fluidique, pouvant délivrer pour chaque position de l'axe 11 à la rotation autour de l'axe de basculement 8 une pression de valeur caractéristique de cette orientation comme on l'a décrit dans le brevet européen N° 0 575 248 et la demande de brevet européen N° 0 989 015, auxquels on se référera à nouveau à cet égard.

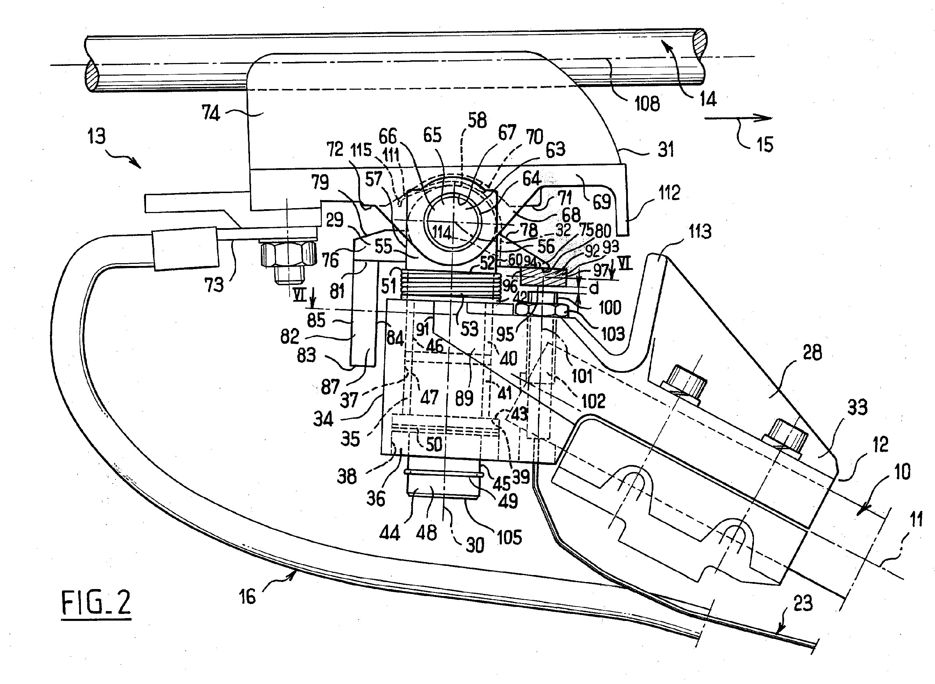

Naturellement, des moyens différents de ceux qui ont été décrits dans le brevet européen N° 0 575 248 et dans la demande de brevet européen N° 0 989 015 pourraient être prévus pour autoriser les diverses fonctions précitées, et le cas échéant pour accomplir ces dernières dans des conditions différentes, en particulier lors d'une détection du déperchage par la tête de captation 13 selon l'invention qui va être décrite à présent en référence à un mode de réalisation actuellement préféré, bien que constituant un exemple non limitatif, illustré aux figures 2 à 8.

Il ressort de ces figures que la tête de captation 13 comporte trois composants principaux, à raison d'un corps de liaison 28 solidaire de la perche 10 à la deuxième extrémité 12 de celle-ci, d'un corps porteur 29 raccordé au corps de liaison 28 par une articulation autour d'un axe de pivotement 30 et d'un organe 31 de captation d'électricité porté par le corps porteur 29, sur lequel il est articulé au-dessus du corps de liaison 28 autour d'un axe de basculement 32 perpendiculaire à l'axe de pivotement 30.

L'axe de pivotement 30 est situé dans un plan 107 perpendiculaire à l'axe 8 de basculement de la perche 10 par rapport à la tourelle 6, c'est-à-dire par rapport également à la base 4 et au trolleybus 1, lequel plan 107 inclut également l'axe 11 de la perche 10 et constitue pour celle-ci ainsi que pour le corps de liaison 28 un plan moyen de symétrie, et il est orienté approximativement verticalement lorsque la perche 10 occupe une orientation de service dans laquelle la tête de captation 13 s'appuie vers le haut sous le fil d'alimentation 14, la plus ou moins grande coïncidence de l'orientation de l'axe 30 avec la verticale étant fonction de l'assiette du véhicule et de la pente, qui en découle, de l'axe 11 de la perche 10.

L'axe de basculement 32 est quant à lui susceptible d'occuper par pivotement du corps porteur 29 autour de l'axe 30 par rapport au corps de liaison 28 une orientation moyenne dans laquelle cet axe 32 est perpendiculaire au plan 107, comme il est illustré aux figures 2, 3, 6, ou toute orientation entre deux orientations limites correspondant à des orientations limites du corps porteur 29 au pivotement autour de l'axe 30 par rapport au corps de liaison 28, lesquelles orientations limites sont illustrées respectivement aux figures 7 et 8 et sont mutuellement symétriques par rapport à l'orientation moyenne illustrée à la figure 6 dont elles sont décalées respectivement d'environ 60° autour de l'axe de pivotement 30.

L'organe 31 de captation d'électricité constitue le composant de la tête de captation 13 apte à venir s'appliquer vers le haut contre le fil d'alimentation 14 dans les orientations de service de la perche 10 en étant alors situé au moins pour l'essentiel au-dessus du corps porteur 29 et du corps de liaison 28.

Ce corps de liaison 28 et, dans ladite orientation moyenne du corps porteur 29 autour de l'axe 30 par rapport au corps de liaison 28, ce corps porteur 29 et l'organe 31 de captation sont respectivement symétriques par rapport au plan 107.

Le corps de liaison 28 comporte de façon solidaire deux parties, à savoir une partie 33 de solidarisation avec l'extrémité 12 de la perche 10 par tout moyen connu, et par exemple par bridage sur une partie de la perche 10 directement adjacente à son extrémité 12 dans des conditions permettant au corps de liaison 28 de se désolidariser de la perche 10 s'il est soumis à une contrainte de traction ou de flexion, en référence à l'axe 11, dépassant un seuil déterminé, d'une façon connue en elle-même et qui ne sera pas détaillée davantage, et une partie 34 située en porte-à-faux par rapport à l'extrémité 12 de la perche 10, dans le prolongement de celle-ci, et constituant un palier 35 d'axe 30.

A cet effet, la partie 35 est percée de part en part, suivant cet axe 30, d'un alésage étagé 36 délimité dans une partie supérieure débouchant vers le haut et dans une partie inférieure débouchant sur le bas par une face périphérique intérieure respective 37, 38 cylindrique de révolution autour de l'axe 30, la face 37 étant plus longue que la face 38 suivant cet axe 30 mais présentant un diamètre inférieur à celui de cette face 38 et les deux faces 37 et 38 étant raccordées mutuellement par un épaulement annulaire, plan 39 perpendiculaire à l'axe 30 et tourné vers le bas.

La face périphérique intérieure 37 reçoit par emboîtement coaxial respectivement depuis le haut et depuis le bas et retient, par exemple par friction, un coussinet respectif 40, 41 de palier, présentant une collerette annulaire 42, 43 d'appui autour de la face 37 respectivement depuis le haut sur la partie 34 du corps de liaison 28 et depuis le bas sous l'épaulement 39, dans une partie supérieure de la face périphérique intérieure 38, c'est-à-dire en retrait vers le haut par rapport au bas de la partie 34 du corps de liaison 28.

A l'intérieur des coussinets 40 et 41 du palier 35 est engagé coaxialement, avec possibilité de rotation autour de l'axe 30 et, conformément à la présente invention, de translation relative suivant cet axe 30, un pivot 44 constituant une partie inférieure du corps porteur 29 et présentant à cet effet une face périphérique extérieure 45 cylindrique de révolution autour de l'axe 30 avec un diamètre sensiblement identique à un diamètre de faces périphériques intérieures 46, 47, cylindriques de révolution autour de l'axe 30, délimitant les coussinets 40 et 41, respectivement, vers cet axe 30.

Vers le bas, la face périphérique extérieure 45 du pivot 44 se raccorde par un biseau annulaire non référencé à une face 105 plane, perpendiculaire à l'axe 30 et tournée vers le bas, laquelle définit pour le pivot 44 une extrémité inférieure libre 48. A proximité de la face 105, dans la face 45 est creusée une gorge 106, annulaire de révolution autour de l'axe 30, laquelle reçoit et retient sur le pivot 44 un anneau élastique 49 du type « circlip », orienté perpendiculairement à l'axe 30 et formant une saillie sur la face 45 dans le sens d'un éloignement par rapport à cet axe 30, en référence auquel cet anneau 49 présente cependant un diamètre maximal inférieur à celui de la face périphérique intérieure 38 de l'alésage étagé 36. L'anneau 49 peut ainsi venir buter vers le haut contre la collerette 43 du coussinet inférieur 41, le cas échéant par l'intermédiaire d'une rondelle 50 de protection de celle-ci contre un contact trop brutal avec l'anneau 49, ce qui définit une position limite haute du pivot 44 et, avec lui, du corps porteur 29 par rapport au corps de liaison 28.

La face périphérique extérieure 45 du pivot 44 s'étend vers le haut à partir de l'anneau 49, suivant l'axe 30, sur une dimension qui est supérieure à la dimension que le palier 34 présente hors tout, de la collerette 43 éventuellement revêtue de la rondelle 50 à la collerette 42, et s'étend ainsi jusqu'à une extrémité supérieure 51 du pivot 44, au niveau de laquelle ce pivot 44 se raccorde de façon solidaire, par exemple par réalisation en une seule pièce, à une partie supérieure 55 du corps porteur 29, qui est située pour l'essentiel au-dessus de la partie 34 du corps de liaison 28 et à laquelle la face périphérique extérieure 45 se raccorde par un épaulement annulaire plan 52 orienté perpendiculairement à l'axe 30 et tourné vers le bas.

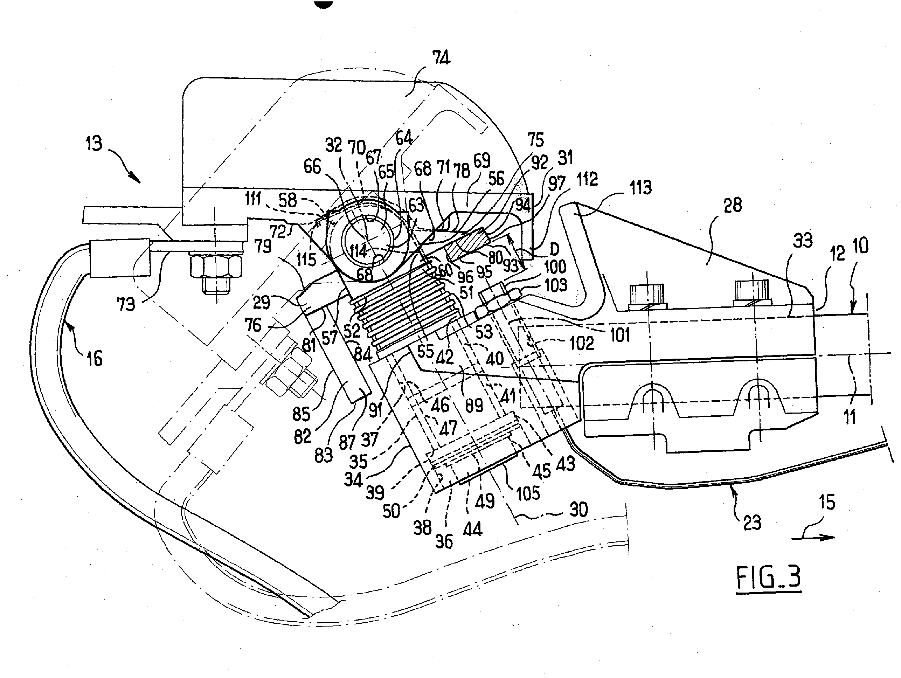

Entre cet épaulement 52 et la collerette 42 du coussinet supérieur 40 est interposé un ressort hélicoïdal 53 d'axe 30, lequel ressort 53 entoure la face périphérique extérieure 45 du pivot 44 et travaille en compression entre l'épaulement 52 et la collerette 42 de façon à tendre à amener élastiquement le corps porteur 29 et le pivot 44 dans une position limite haute, illustrée à la figure 3, dans laquelle l'épaulement 52 est éloignée au maximum de la collerette 42 suivant l'axe 30 et dans laquelle l'anneau 49 bute vers le haut contre la collerette 43 par l'intermédiaire de la rondelle 50. Cependant, par compression du ressort 53 jusqu'à ce que les spires de celui-ci soient jointives, le corps porteur 29 et le pivot 44 peuvent également occuper une position limite basse, illustrée à la figure 2, dans laquelle l'épaulement 52 est rapproché au maximum de la collerette 42, dans les limites imposées par la superposition des spires alors jointives du ressort 53, et dans laquelle l'anneau 49 est décalé vers le bas non seulement par rapport à la rondelle 50 et à la collerette 43, mais également par rapport au bas de la partie 34 du corps de liaison 28 pour autoriser le montage et le démontage éventuel de l'anneau 49.

Pour réduire autant que possible la masse d'ensemble du corps porteur 29 et de l'organe de captation 31, et par conséquent leur inertie, le pivot 44 est avantageusement réalisé sous forme creuse, comme il ressort plus particulièrement de la figure 4 qui montre le corps porteur 29 seul. A cet effet, le pivot 44 est creusé coaxialement, par sa face extrême 105, d'un trou borgne 54 allant jusqu'à un niveau de l'axe 30 correspondant approximativement à celui de l'épaulement 52.

Alors que cet épaulement 52 est délimité vers l'axe 30 par un contour circulaire, correspondant à sa jonction avec la face périphérique extérieure 45 du pivot 44, il présente dans le sens d'un éloignement par rapport à l'axe 30 un contour carré, défini par son raccordement avec quatre faces planes, perpendiculaires deux à deux, délimitant dans le sens d'un éloignement par rapport à l'axe 30 la partie supérieure 55 du corps porteur 29, laquelle entoure l'axe 32, situé à un niveau supérieur à celui de l'épaulement 52, et présente un plan moyen de symétrie 77 qui inclut l'axe 30, est perpendiculaire à l'axe 32, constitue un plan moyen de symétrie pour l'ensemble du corps porteur 29 et coïncide avec le plan moyen 107 dans l'orientation moyenne précitée du corps porteur 29 par rapport au corps de liaison 28, illustrée aux figures 2, 3 et 6.

Deux de ces faces, mutuellement parallèles, sont parallèles aux axes 30 et 32, disposées respectivement de part et d'autre de ces axes, perpendiculairement au plan 77 que chacune chevauche symétriquement, et situées symétriquement l'une de l'autre par rapport à l'axe 30, à savoir une face 56 dont on comprendra par la suite qu'elle constitue une face avant compte tenu du sens normal de déplacement 15 du trolleybus 1 et d'une face arrière 57 compte tenu de ce sens normal 15 de déplacement du trolleybus. Ces deux faces 56, 57 s'étendent ainsi, à partir de leur raccordement à l'épaulement 52, jusqu'à un niveau de l'axe 30 correspondant à celui de l'axe 32, au-dessus duquel ces deux faces 56 et 57 sont raccordées mutuellement par une face supérieure convexe 58 qui chevauche également symétriquement le plan 77 et pourrait être hémicylindrique de révolution autour de l'axe 32 mais présente une forme comparativement plus aplatie dans l'exemple illustré.

Les deux autres faces 59 et 60 auxquelles l'épaulement 52 se raccorde dans le sens d'un éloignement par rapport à l'axe 30 sont quant à elles mutuellement parallèles, perpendiculaires à l'axe 32 et symétriques l'une de l'autre par rapport à l'axe 30 ainsi que par rapport au plan 77 auquel elles sont également parallèles. Elles s'étendent, vers le haut, de l'épaulement 52 à la face 58 qu'elles raccordent ainsi mutuellement, de même qu'elles raccordent mutuellement les faces 56 et 57.

Suivant l'axe 32, la partie supérieure 55 du corps porteur 29 est percée de part en part, c'est-à-dire de l'une à l'autre de ses faces 59 et 60, d'un alésage 61 délimité dans le sens d'un éloignement par rapport à l'axe 32 par une face périphérique intérieure 62 cylindrique de révolution autour de cet axe 32 avec un diamètre constant.

Par l'alésage 61, la partie supérieure 55 du corps porteur 29 reçoit coaxialement et guide en particulier à la rotation relative autour de l'axe 32 un arbre 63 délimité à cet effet, dans le sens d'un éloignement par rapport à l'axe 32, par une face périphérique extérieure 64 cylindrique de révolution avec un diamètre constant, sensiblement identique à celui de la face 62.

Cet arbre 63 est délimité dans les deux sens de l'axe 32 par une face extrême respective 65 perpendiculaire à l'axe 32 et à laquelle la face périphérique extérieure 64 se raccorde par un biseau annulaire respectif.

Entre ses faces extrêmes 65, l'arbre 63 présente suivant l'axe 32 une dimension supérieure à celle qui sépare mutuellement les faces 59 et 60, de façon à présenter un tronçon extrême 66 en porte-à-faux suivant l'axe 32 respectivement de part et d'autre de la partie supérieure 55 du corps porteur 29, symétriquement par rapport au plan 77.

Par chacun de ses tronçons extrêmes 66, l'arbre 63 s'engage coaxialement dans un alésage respectif 67 d'un flasque respectif 68 qu'une partie inférieure 69 de l'organe 31 de captation d'électricité présente en saillie vers le bas. A cet effet, chaque alésage 67 est délimité vers l'axe 32 par une face périphérique intérieure 68 cylindrique de révolution autour de cet axe avec un diamètre sensiblement identique à celui de la face périphérique extérieure 64 de l'arbre 63, dont le tronçon extrême respectif 66 est retenu solidairement dans l'alésage 67 correspondant par exemple par serrage ou par tout autre moyen, d'une façon connue en elle-même d'un Homme du métier. Autour de chaque tronçon extrême 66 de l'arbre 63, le flasque 68 correspondant s'appuie sur la face 59 ou 60, respectivement, de la partie supérieure 55 du corps porteur 29, avec possibilité de glissement relatif libre suivant une direction circonférentielle en référence à l'axe 32.

La coopération entre l'arbre 63, les flasques 68, et la partie supérieure 55 du corps porteur 29, assure ainsi un montage de l'organe 31 de captation d'électricité au basculement autour de l'axe 32 par rapport au corps porteur 29, sans autre possibilité de déplacement relatif, alors que la coopération entre le pivot 44 du corps porteur 29 et la partie 34 du corps de liaison 28 assure un montage de l'organe de captation 31 et du corps porteur 29 à la fois en pivotement autour de l'axe 30 par rapport au corps de liaison 28 et en translation limitée, suivant cet axe 30, par rapport au corps de liaison 28.

Comme le corps porteur 29, l'organe de captation 31 présente un plan moyen de symétrie coupant perpendiculairement l'axe 32 entre les flasques 68, lequel plan moyen de symétrie se confond ainsi avec le plan moyen 77 de symétrie du corps porteur 29.

Entre les deux flasques 68, la partie inférieure 69 de l'organe de captation 31 est délimitée vers le bas et vers l'axe 32 par une face inférieure concave 70 qui chevauche sans contact la face supérieure 58 convexe de la partie supérieure 55 du corps porteur 29 et se raccorde, par deux zones circonférentiellement extrêmes en référence à l'axe 32, respectivement à une face inférieure plane 71 et une face inférieure plane 72 de la partie inférieure 69 de l'organe de captation 31, lesquelles faces 71 et 72 sont disposées suivant un même plan géométrique non référencé qui est parallèle à l'axe 32 et situé au-dessus de celui-ci mais en dessous du fil d'alimentation 14, parallèlement à celui-ci, lorsque l'organe 31 de captation d'électricité s'applique sous ce fil d'alimentation 14 comme il est illustré à la figure 2. Ces faces 71 et 72 sont alors situées respectivement en avant de l'axe 32 et en arrière de celui-ci en référence au sens 15 et, comme il apparaîtra par la suite, elles constituent des surfaces de butée limitant le basculement possible de la partie inférieure 69 de l'organe de captation 31, c'est-à-dire de cet organe 31 dans son ensemble, autour de l'axe 32 par rapport au corps porteur 29 à une oscillation autour d'une orientation que l'organe porteur 31 occupe par rapport au corps porteur 29 lorsqu'il s'applique sous le fil d'alimentation 14.

Respectivement vers l'avant à partir de la face de butée 71 et vers l'arrière à partir de la face de butée 72, la partie inférieure 69 de l'organe de captation 31 est délimitée vers le bas par des faces qui sont disposées du même côté de l'axe 32 que ces faces 71 et 72 et dont la forme est indifférente au regard de la présente invention dès lors qu'elle ne constitue pas d'obstacle à l'oscillation limitée précitée de l'organe de captation 31 par rapport au corps porteur 29. Cette forme ne sera donc pas décrite si ce n'est que l'on signalera que celle de ces faces inférieures qui est située le plus en arrière en référence au sens 15 reçoit, par exemple par boulonnage, une cosse extrême 73 du câble 16 dont la partie inférieure 69 de l'organe de captation 31 assure la liaison électrique avec une partie supérieure 74 de cet organe de captation 31, laquelle peut présenter toute conception connue, par exemple celle qui est décrite dans le brevet européen N° 0 226 497, pour recevoir un frotteur d'usure, non représenté, épousant partiellement une partie inférieure et des parties latérales du fil 14, en orientant l'organe 31 de captation d'électricité et le corps porteur 29 de telle sorte que leur plan moyen commun de symétrie, à savoir le plan moyen 77 de symétrie du corps porteur 29, inclue en permanence un axe moyen 108 du fil 14, dans des conditions bien connues d'un Homme du métier. La conception de la partie supérieure 74 de l'organe de captation 31 est indifférente au regard de la présente invention et ne sera de ce fait pas décrite davantage.

Pour constituer sur le corps porteur 29 des contreparties de butée des surfaces de butée 71 et 72, respectivement, vers le bas, la partie supérieure 55 du corps porteur 29 porte solidairement, en saillie et en porte-à-faux respectivement vers l'avant par rapport à sa face 56 et vers l'arrière par rapport à sa face 57, en référence au sens 15, deux becs 75 et un appendice 76, les deux becs 75 étant mutuellement symétriques par rapport au plan moyen 77 de symétrie du corps porteur 29, plan 77 que l'appendice 76 chevauche quant à lui symétriquement.

Vers le haut, les deux becs 75 sont délimités par une face supérieure plane respective 78 disposée suivant un même plan géométrique non référencé passant au-dessus de l'axe de basculement 32 en position de service, et plus précisément dans une position telle que la face de butée 71 vienne s'appliquer à plat contre les deux faces 78 dans une orientation de l'organe de captation 31 autour de l'axe 32, par rapport au corps porteur. 29, correspondant à une limite de basculement de l'organe de captation 31 vers l'avant, en référence au sens 15, à partir de son orientation de service illustrée à la figure 2. Un ressort 111, agissant entre le corps porteur 29 et l'organe de captation 31, rappelle élastiquement l'organe de captation 31 vers cette orientation limite par rapport au corps porteur 29 en cas de déperchage, de telle sorte qu'un becquet 112 que la partie inférieure 69 de l'organe de captation 31 présente en saillie vers le bas dans une zone d'extrémité avant, en référence au sens 15, vienne alors se placer directement en arrière d'un becquet 113 que la partie 33 du corps de liaison 28 présente en saillie vers le haut en avant de la partie 34 de celui-ci et du corps porteur 29, en référence au sens 15, pour empêcher tout engagement d'une suspente du fil 14 entre l'organe de captation 31 et le corps porteur 29 lorsque le trolleybus 1 poursuit sa route sur l'erre après un déperchage. Cette orientation limite a été illustrée en trait mixte à la figure 1 et en trait plein à la figure 3.

De façon similaire, l'appendice 76 présente vers le haut une face supérieure plane 79 située dans un plan géométrique passant au-dessus de l'axe 32 et orientée de telle sorte que la face de butée 72 de la partie inférieure 69 de l'organe de captation 31 vienne s'y appliquer à plat dans une orientation limite de basculement de l'organe de captation 31 vers l'arrière, en référence au sens 15, autour de l'axe 32 par rapport au corps porteur 29 à partir de l'orientation de service illustrée à la figure 2. Cette orientation limite a été illustrée en trait mixte à la figure 3.

La disposition, à cet effet, des faces supérieures 78 des becs 75 et de la face supérieure 79 de l'appendice 76, de même que les positions des faces inférieures de butée 71 et 72 de la partie inférieure 69 de l'organe de captation 31, peuvent être aisément déterminées par un Homme du métier dans une large gamme de possibilités si bien qu'elles ne seront pas détaillées davantage.

La nature et la position du ressort 111 peuvent quant à elles être librement choisies par un Homme du métier dans une large gamme de possibilités. Ainsi, de façon non illustrée, le ressort 111 peut consister en un ressort hélicoïdal travaillant en compression entre la face supérieure 79 de l'appendice 76 et la face inférieure de butée 72, d'une façon connue en elle-même, mais il peut également consister, comme il est illustré, en un ressort à lame contournant la face supérieure convexe 58 entre une extrémité repliée 114, reposant à plat sur la face 56 et solidarisée avec le corps porteur 29 par exemple par vissage, de façon non représentée mais aisément concevable par un Homme du métier, et une extrémité 115 d'appui élastique, avec possibilité de glissement relatif, sous la face 70 de la partie inférieure 69 de l'organe de captation 31, immédiatement en avant de la face de butée 72, c'est-à-dire en arrière de l'axe de basculement 32, en référence au sens 15.

Vers le bas, chaque bec 75 et l'appendice 76 est délimité par une face inférieure respective 80, 81, orientée perpendiculairement à l'axe 30 et située en référence à cet axe, comme les faces supérieures 78 et 79, à un niveau intermédiaire entre les niveaux respectifs de l'épaulement 52 et de l'axe 32.

En saillie parallèlement à l'axe 30 sous sa face inférieure 81 et dans une position plus éloignée de l'axe 30 que les limites de la partie 34 du corps de liaison 28 vers l'arrière en référence au sens 15, l'appendice 76 porte solidairement une tige rectiligne 82 parallèle à l'axe 30 et s'étendant vers le bas jusqu'à une extrémité inférieure libre 83 située à un niveau qui, même lorsque le corps porteur 29 occupe une position limite haute par rapport au corps de liaison 28, sous l'action du ressort 53, après un déperchage, comme on l'a illustré à la figure 3, est inférieur au niveau supérieur de la partie 34 du corps de liaison 28.

La tige 82, symétrique par rapport au plan 77, est délimitée respectivement vers l'axe 30 et dans le sens d'un éloignement par rapport à celui-ci par des faces planes 84 perpendiculaires au plan 77 qu'elles chevauchent respectivement symétriquement. Dans le sens d'un éloignement par rapport au plan 77, respectivement de part et d'autre de celui-ci, cette tige 82 est délimitée par deux faces également planes 86, 87 qui sont par contre disposées suivant des plans respectifs incluant l'axe 30, si bien que la tige 82 présente une section en trapèze isocèle lorsqu'elle est vue en coupe par un quelconque plan perpendiculaire à l'axe 30, comme le montrent plus particulièrement les figures 6 à 8.

La tige 82, par ses faces 86 et 87, est destinée à servir de butée limitant le pivotement du corps porteur 29 et, avec lui, de l'organe de captation 31, autour de l'axe 30, par rapport au corps de liaison 28 autour de l'orientation moyenne, illustrée aux figures 2, 3, 6, dans laquelle le plan 77 coïncide avec le plan 107.

Pour servir de contrepartie, à cet effet, aux faces 86 et 87, la partie 33 des solidarisation du corps de liaison 28 se prolonge vers l'arrière, en référence au sens 15, respectivement de part et d'autre d'une zone supérieure de la partie 34, par des nervures 88 et 89 mutuellement symétriques par rapport au plan 107 et délimitées en particulier vers l'arrière par une face plane respective 90, 91 située dans un plan respectif incluant l'axe 30.

Les faces 90 et 91, mutuellement symétriques par rapport au plan 31, définissent entre elles, en référence à l'axe 30, un angle α qui est supérieur à l'angle β que les faces 86 et 87 définissent entre elles en référence à l'axe 30, et l'on choisit les valeurs respectives de ces angles α et β de telle sorte que leur différence soit égale au débattement angulaire dont on désire faire bénéficier le corps porteur 29 autour de l'axe 30 par rapport au corps de liaison 28, à savoir 120° dans l'exemple non limitatif choisi. Ainsi, le corps porteur 29 et, avec lui, l'organe de captation 31 peuvent occuper autour de l'axe 30, par rapport au corps de liaison 28, non seulement l'orientation moyenne illustrée aux figures 2, 3, 6, dans laquelle le plan 77 coïncide avec le plan 107, mais également l'une ou l'autre des positions limites illustrées respectivement aux figures 7 et 8, dans lesquelles, respectivement, la face 86 bute contre la face 90 et la face 87 bute contre la face 91, ainsi que toute orientation intermédiaire entre ces orientations limites, et ceci quelle que soit la position que le pivot 44 et, avec lui, le corps porteur 29 occupent parallèlement à l'axe 30 par rapport au corps de liaison 28.

Le ressort 53 est calibré de telle sorte que la réaction F_{R} que le câble d'alimentation 14 oppose à l'organe de captation 31 lorsque celui-ci s'applique avec l'effort F contre ce câble d'alimentation 14 surcompense, en s'ajoutant à l'effet du poids de l'organe porteur 29 et de l'organe de captation 31, l'effort élastiquement appliqué par ce ressort dans le sens d'un passage de l'organe porteur 29 de sa position limite basse à sa position limite haute par rapport au corps de liaison 28 si bien que, dans des conditions normales de circulation, dans lesquelles l'organe de captation 31 s'applique sous le fil d'alimentation 14, le pivot 44 et le corps porteur 29 occupent leur position limite basse par rapport au corps de liaison 28, comme le montre la figure 2. Par contre, dans la mesure où l'effort F_{R} s'annule en cas de déperchage, le ressort 53 doit provoquer le passage du pivot 44 du corps porteur 29 à la position limite haute illustrée à la figure 3 et, à cet effet, il est convenablement calibré pour surcompenser alors la composante de poids de l'ensemble du corps porteur 29 et de l'organe de captation 31 s'exerçant suivant l'axe 30.

En relation avec ce calibrage du ressort 53 et avec de telles conditions de passage du corps porteur 29, en particulier, de la position limite basse à la position limite haute par rapport au corps de liaison 28, la présente invention propose de détecter le déperchage par détection de ce que le corps porteur 29 a gagné sa position limite haute, de préférence par détection du fait qu'il a quitté sa position limite basse ou des positions proches de cette position limite basse, par rapport au corps de liaison 28.

A cet effet, on utilise de préférence des moyens de détection comportant un composant passif de détection 92, qui ne nécessite pas de raccordement électrique, et que l'on fait porter solidairement par le corps porteur 29, et un composant actif de détection 100, nécessitant quant à lui un tel raccordement, en pratique par les fils 23, et que l'on fait porter solidairement de préférence par le corps de liaison 28, comme ce peut être le cas de détecteurs inductifs ou capacitifs qui, en outre, lorsqu'ils sont utilisés en tant que capteurs de proximité, permettent de détecter non seulement un positionnement relatif précis mais également des positionnements relatifs voisins.

Afin de permettre la détection quelle que soit l'orientation du corps porteur 29 et de l'organe de captation 31 en pivotement autour de l'axe 30 par rapport au corps de liaison 28, on prévoit dans l'exemple illustré le composant passif 92 des moyens de détection sous forme d'un segment 93 de couronne réalisé en un matériau approprié, par exemple du fer ou tout autre matériau présentant des caractéristiques magnétiques appropriées, lequel segment 93 est axé sur l'axe 30 et fixé solidairement au corps porteur 29 par exemple par soudure à plat sous les faces inférieures 80 des becs 75, par une face supérieure plane 94 orientée perpendiculairement à l'axe 30 et tournée vers le haut.

Le segment 93 est par ailleurs délimité, sous la face 94, par une face inférieure 95 également plane et perpendiculaire à l'axe 30 mais tournée vers le bas, par des faces respectivement périphérique intérieure 96 et périphérique extérieure 97 l'une et l'autre cylindriques de révolution autour de l'axe 30 et tournées respectivement vers celui-ci et dans le sens d'un éloignement par rapport à celui-ci, avec pour la face 96 un diamètre supérieur à celui du ressort 53 de façon à éviter un contact mutuel, et par deux faces extrêmes 98, 99 situées dans un plan respectif incluant l'axe 30 et mutuellement symétriques par rapport au plan 77.

Ces deux faces extrêmes 98 et 99 définissent entre elles, en référence à l'axe 30, un angle γ au moins égal à la différence entre les angles α et β et de préférence du même ordre de grandeur que l'angle α de telle sorte que, quelle que soit l'orientation du corps porteur 29 et de l'organe de captation 31 autour de l'axe 30 par rapport au corps de liaison 28, le segment 93 chevauche le plan moyen 107 commun à la perche 10 et au corps de liaison 28, en avant du pivot 44 en référence au sens 15, comme le montrent les figures 6 à 8. Le corps de liaison 28, en particulier en ce qui concerne ses nervures 88 et 89, est dimensionné de telle sorte que, quelle que soit l'orientation relative précitée autour de l'axe 30, même lorsque le corps porteur 29 occupe sa position limite basse par rapport au corps de liaison 28, le segment 93 ne vienne pas au contact du corps de liaison 28.

Le composant actif 100 des moyens de détection est quant à lui disposé suivant un axe 101 disposé dans le plan 107 en avant du pivot 44, à savoir plus précisément à une distance de l'axe 30 sensiblement égale à la moyenne entre les rayons respectifs des faces périphérique intérieure 96 et périphérique extérieure 97 du segment de couronne 93, et il présente en référence à l'axe 30 un développement angulaire beaucoup plus faible que celui du segment de couronne 93 dont, cependant, les dimensions angulaires en référence à l'axe 30 sont telles qu'il soit toujours placé en regard du composant actif 100 suivant une direction parallèle à l'axe 30, qui est également la direction de l'axe 101, dans les limites du pivotement possible du corps porteur 29 et de l'organe de captation 31 autour de l'axe 30 par rapport au corps de liaison 28.

La position du composant actif de détection 100 suivant son axe 101 par rapport à l'organe de liaison 28 est réglée, par exemple par vissage plus ou moins profond dans un alésage taraudé coaxial 102 du corps de liaison 28 puis blocage au moyen d'un écrou 103 formant contre-écrou, de telle sorte que lorsque le corps porteur 29 occupe sa position limite basse, la face inférieure 95 du composant passif 92 soit espacée du composant-passif 100, suivant l'axe 101, d'une distance d suffisamment faible pour que le composant actif 100 détecte la présence du composant passif 92 et pour que, après que le composant passif 92 se soit éloigné de façon prédéterminé du composant actif 100 suivant l'axe 101 dans des conditions telles que, cependant, le corps porteur 29 dont il est solidaire n'ait pas atteint la position limite haute, le composant actif 100 détecte encore la présence du composant passif 92. Cependant, cette distance est également telle que, si le composant passif 92 s'éloigne du composant actif 100 au-delà de cette limite, en particulier jusqu'à atteindre un éloignement relatif D correspondant à la position limite haute du corps porteur 29 et de l'organe de captation 31 par rapport au corps de liaison 28, le composant actif 100 ne détecte plus sa présence et émette un signal de déperchage, transmis par les fils 23 à l'unité de commande 24 pour, en particulier, provoquer l'alimentation du vérin 19 dans le sens d'un rabattement de la perche 10 et de la tête de captation 13.

Ainsi, on conserve la possibilité d'un certain débattement du corps porteur 29 et de l'organe de captation 31, parallèlement à l'axe 30, à partir de la position limite basse par rapport au corps de liaison 28 afin d'éviter qu'un allégement de l'effort F et de 1a réaction F_{R} opposée par le fil d'alimentation 14 à la tête de captation 13 en raison, par exemple, d'un changement d'assiette brutal du véhicule provoque un rabattement intempestif de la perche 10 et de la tête de captation 13, ce qui permet de limiter le rabattement de la perche 10 et de la tête de captation 13 aux cas de déperchage effectif ou, naturellement, aux cas où l'on provoque volontairement ce rabattement par exemple en fin de service.

Un Homme du métier comprendra cependant aisément que l'on pourrait, sans sortir du cadre de la présente invention, utiliser des moyens différents de ceux qui ont été décrits et représentés pour détecter une translation du corps porteur 29 vers le haut, par rapport au corps de liaison 28, suivant leur axe 30 de pivotement relatif, dans des conditions caractéristiques d'un déperchage, la réalisation pratique des différents composants de la tête de captation 13, de la perche 10 et des moyens prévus pour lever ou rabattre celle-ci pouvant également varier dans une large mesure sans que l'on sorte pour autant du cadre de l'invention.

## Revendications

1. Dispositif de captation d'électricité pour un véhicule (1) tel qu'un trolleybus ou un tramway, comportant :
- une base (4) de montage sur le véhicule (1),
- une perche (10) de captation d'électricité, présentant une première et une deuxième extrémités (9, 12) et articulée sur la base (4) par sa première extrémité (9), notamment autour d'un axe approximativement horizontal de basculement (8) pour présenter une gamme déterminée d'orientations possibles incluant une orientation limite de repos, dans laquelle elle est approximativement horizontale, une orientation limite de déperchage, dans laquelle elle est dressée à partir de sa première extrémité (9), et une multitude d'orientations intermédiaires de service dans lesquelles la perche (10) est ascendante de sa première extrémité (9) vers sa deuxième extrémité (12),
- une tête de captation d'électricité (13), comportant un corps de liaison (28), solidaire de la perche (10) à la deuxième extrémité (12) de celle-ci, un corps porteur (29), raccordé au corps de liaison (28) par une articulation (35, 44) autour d'un axe de pivotement (30) situé dans un plan (107) perpendiculaire audit axe de basculement (8), ledit axe de pivotement (30) étant approximativement vertical dans lesdites orientations de service, et un organe de captation d'électricité (31), porté par le corps porteur (29), situé au moins pour l'essentiel au-dessus du corps porteur (29) et du corps de liaison (28) dans lesdites orientations de service et apte à venir s'appliquer vers le haut contre un fil approximativement horizontal d'alimentation en électricité (14), alors que la perche (10) occupe l'une quelconque desdites orientations de service,
- des moyens de levage (19) pour appliquer à la perche (10), autour dudit axe de basculement (8), un couple de levage dans un sens allant de l'orientation limite de repos vers l'orientation limite de déperchage de façon à appliquer l'organe de captation d'électricité (31), vers le haut, contre le fil d'alimentation en électricité (14) avec un effort (F) dont la valeur entre dans une gamme déterminée de valeurs, alors que la perche (10) occupe l'une quelconque desdites orientations intermédiaires de service,
- des moyens de rabattement (19) pour appliquer de façon commandée à la perche (10) un couple de rabattement dans un sens opposé audit sens, autour dudit axe de basculement, pour dégager l'organe de captation d'électricité (31), vers le bas, par rapport au fil d'alimentation en électricité (14),
- des moyens (24) de commande desdits moyens de rabattement (19), comportant des moyens de détection (92, 100) pour détecter une annulation dudit effort (F) et pour commander alors automatiquement un rabattement de la perche (10) vers son orientation limite de repos afin de descendre automatiquement la tête de captation (13) en cas de déperchage,
**caractérisé en ce que**
- ladite articulation (35, 44) est réalisée de façon à autoriser une translation du corps porteur (29) par rapport au corps de liaison (28) suivant ledit axe de pivotement (30), entre une position limite haute et une position limite basse, par rapport au corps de liaison (28),
- sont prévus des moyens (53) de sollicitation élastique (53) du corps porteur (29) vers sa position limite haute par rapport au corps de liaison (28), lesdits moyens de sollicitation élastique (53) étant calibrés de telle sorte que le corps porteur (29) occupe sa position limite basse, par réaction, lorsque l'organe de captation d'électricité (31) est appliqué vers le haut contre le fil d'alimentation en électricité (14) avec un effort (F) dont la valeur entre dans ladite gamme déterminée, et sa position limite haute en cas d'annulation dudit effort (F), en particulier en cas de déperchage, et
- les moyens de détection (92, 100) sont des moyens (92, 100) de détection de l'occupation, par le corps porteur (29), de l'une, déterminée, desdites positions limites par rapport au corps de liaison (28).

2. Dispositif selon la revendication 1, **caractérisé en ce que** ladite position limite déterminée est la position limite basse.

3. Dispositif selon la revendication 2, **caractérisé en ce que** les moyens de détection (92, 100) présentent une tolérance déterminée de détection afin de détecter l'occupation de ladite position limite basse et d'une plage déterminée de positions proches de la position limite basse mais excluant la position limite haute.

4. Dispositif selon l'une quelconque des revendications 1 à 3, **caractérisé en ce que** les moyens de détection (92, 100) sont des moyens de détection de la position relative de deux zones déterminées, situées en regard l'une de l'autre suivant une direction (axe 101) définie par ledit axe de pivotement (30), à raison d'une zone déterminée du corps porteur (29) et d'une zone déterminée du corps de liaison (28).

5. Dispositif selon la revendication 4 dans sa relation de dépendance vis-à-vis de l'une quelconque des revendications 2 et 3, **caractérisé en ce que** ladite zone du corps porteur (29) est située au-dessus de ladite zone du corps de liaison (28) dans lesdites orientations de service et **en ce que** les moyens de détection (92, 100) détectent l'occupation de la position limite basse par détection d'une proximité relative desdites zones.

6. Dispositif selon l'une quelconque des revendications 4 et 5, **caractérisé en ce que** les moyens de détection (92, 100) comportent un composant actif de détection (100), porté solidairement par le corps de liaison (28), dans ladite zone de celui-ci, et un composant passif de détection (92), porté solidairement par le corps porteur (29), dans ladite zone de celui-ci.

7. Dispositif selon l'une quelconque des revendications 1 à 6, **caractérisé en ce que** les moyens de détection (92, 100) sont choisis dans un groupe comportant les détecteurs inductifs et les détecteurs capacitifs.

8. Dispositif selon la revendication 7 dans sa relation de dépendance vis-à-vis de la revendication 6, **caractérisé en ce que**
- il comporte des moyens de butée (86, 87, 90, 91) pour limiter le pivotement du corps porteur (29) autour dudit axe de pivotement (30) par rapport au corps de liaison (28) à une plage angulaire déterminée,
- lesdites zones du corps de liaison (28) et du corps porteur (29) sont décalées par rapport audit axe de pivotement (30), et
- les moyens de détection (92, 100) comportent un détecteur (100), porté solidairement par le corps de liaison (28), dans ladite zone de celui-ci, et présentant un développement angulaire inférieur à ladite plage déterminée, et une contrepartie (92) apte à influer sur le détecteur (100), portée solidairement par le corps porteur (29), dans ladite zone de celui-ci, et présentant autour dudit axe de pivotement (30) un développement angulaire au moins égal à ladite plage angulaire déterminée et une position telle qu'elle soit en permanence placée en regard du détecteur (100) suivant la direction (axe 101) de l'axe de pivotement (30), dans les limites de pivotement du corps porteur (29) par rapport au corps de liaison (28).

9. Dispositif selon l'une quelconque des revendications 1 à 8, **caractérisé en ce que** ladite articulation (35, 44) comporte un pivot (44) solidaire du corps porteur (29) et engagé dans un palier (35) du corps de liaison (28) avec possibilité de rotation relative autour dudit axe de pivotement (30) et de coulissement relatif suivant ledit axe de pivotement (30), entre les positions limites haute et basse, et des moyens (35) de sollicitation élastique du pivot (44) vers la position correspondant à la position limite haute, par rapport au palier (35).

10. Dispositif selon la revendication 9, **caractérisé en ce que** les moyens de sollicitation élastique (53) comportent un ressort hélicoïdal coaxial (53), travaillant à la compression.

11. Tête de captation d'électricité, destinée en particulier à la réalisation d'un dispositif selon l'une quelconque des revendications 1 à 10 et comportant un corps de liaison (28), apte à être solidarisé avec une extrémité (12) d'une perche de captation d'électricité (10), un corps porteur (29), raccordé au corps de liaison (28) par une articulation (35, 44) autour d'un axe de pivotement (30), et un organe de captation d'électricité (31), porté par le corps porteur (29) et situé au moins pour l'essentiel d'un même côté du corps porteur (29) et du corps de liaison (28) suivant l'axe de pivotement (30),
**caractérisée en ce que** :
- ladite articulation (35, 44) est réalisée de façon à autoriser une translation du corps porteur (29) par rapport au corps de liaison (28) suivant ledit axe de pivotement (30), entre une position limite de décalage maximal dudit côté et une position limite de décalage minimal dudit côté, par rapport au corps de liaison (28), et
- sont prévus des moyens (53) de sollicitation élastique du corps porteur (29) vers sa position limite de décalage maximal par rapport au corps de liaison (28), et des moyens (92, 100) de détection de l'occupation, par le corps porteur (29), de l'une desdites positions limites par rapport au corps de liaison (28).

12. Tête selon la revendication 11, **caractérisée en ce que** ladite position limite est la position limite de décalage minimal.

13. Tête selon la revendication 12, **caractérisée en ce que** les moyens de détection (92, 100) présentent une tolérance déterminée de détection afin de détecter l'occupation de ladite position limite de décalage minimal et d'une plage déterminée de positions proches de la position limite de décalage minimal mais excluant la position limite de décalage maximal.

14. Tête selon l'une quelconque des revendications 11 à 13, **caractérisée en ce que** les moyens de détection (92, 100) sont des moyens de détection de la position relative de deux zones déterminées, situées en regard l'une de l'autre suivant une direction (axe 101) définie par ledit axe de pivotement (30), à raison d'une zone déterminée du corps porteur (29) et d'une zone déterminée du corps de liaison (28).

15. Tête selon la revendication 14 dans sa relation de dépendance vis-à-vis de l'une quelconque des revendications 12 et 13, **caractérisée en ce que** ladite zone du corps porteur (29) est située dudit côté de la zone du corps de liaison (28) et **en ce que** les moyens de détection (92, 100) détectent l'occupation de la position limite de décalage minimal par détection d'une proximité relative desdites zones.

16. Tête selon l'une quelconque des revendications 14 et 15, **caractérisée en ce que** les moyens de détection (92, 100) comportent un composant actif de détection (100), porté solidairement par le corps de liaison (28), dans ladite zone de celui-ci, et un composant passif de détection (100), porté solidairement par le corps porteur (29), dans ladite zone de celui-ci.

17. Tête selon l'une quelconque des revendications 11 à 16, **caractérisée en ce que** les moyens de détection (92, 100) sont choisis dans un groupe comportant les détecteurs inductifs et les détecteurs capacitifs.

18. Tête selon la revendication 17 dans sa relation de dépendance vis-à-vis de la revendication 16, **caractérisée en ce que**
- il comporte des moyens de butée (86, 87, 90, 91) pour limiter le pivotement du corps porteur (29) autour dudit axe de pivotement (30) par rapport au corps de liaison (28) à une plage angulaire déterminée,
- lesdites zones du corps de liaison (28) et du corps porteur (29) sont décalées par rapport audit axe de pivotement (30), et
- les moyens de détection (92, 100) comportent un détecteur (100), porté solidairement par le corps de liaison (28), dans ladite zone de celui-ci, et présentant un développement angulaire inférieur à ladite plage déterminée, et une contrepartie (92) apte à influer sur le détecteur (100), portée solidairement par le corps porteur (29), dans ladite zone de celui-ci, et présentant autour dudit axe de pivotement (30) un développement angulaire au moins égal à ladite plage angulaire déterminée et une position telle qu'elle soit en permanence placée en regard du détecteur (100) suivant la direction (axe 101) de l'axe de pivotement (30), dans les limites de pivotement du corps porteur (29) par rapport au corps de liaison (28).

19. Tête selon l'une quelconque des revendications 11 à 18, **caractérisée en ce que** ladite articulation (35, 44) comporte un pivot (44) solidaire du corps porteur (29) et engagé dans un palier (35) du corps de liaison (28) avec possibilité de rotation relative autour dudit axe de pivotement (30) et de coulissement relatif suivant ledit axe de pivotement (30), entre des positions relatives limites correspondant auxdites positions limites de décalage maximal et de décalage minimal, et des moyens (53) de sollicitation élastique du pivot (44) vers la position correspondant à la position limite de décalage maximal, par rapport au palier (35).

20. Tête selon la revendication 19, **caractérisée en ce que** les moyens de sollicitation élastique (53) comportent un ressort hélicoïdal coaxial (53), travaillant à la compression.
